# EUROPEAN PATENT SPECIFICATION

(11) **EP 2 184 714 B1**
(45) Date of publication and mention of the grant of the patent: **01.06.2016**
(21) Application number: 08792221.7
(22) Date of filing: 05.08.2008
(51) Int. Cl.: G06T 19/00, G06F 17/50, G06T 15/00

(54) **LAYERING SIMULATION APPARATUS, SIMULATION METHOD, SIMULATION PROGRAM**
SCHICHTUNGSSIMULATIONSVORRICHTUNG, SIMULATIONSVERFAHREN, SIMULATIONSPROGRAMM
APPAREIL DE SIMULATION DE SUPERPOSITION DE COUCHES, PROCÉDÉ DE SIMULATION, PROGRAMME DE SIMULATION

(30) Priority: 24.08.2007 JP 2007218007
(43) Date of publication of application: 12.05.2010
(73) Proprietor: Shima Seiki Manufacturing., Ltd., Wakayama-shi, Wakayama 641-0003 (JP)
(72) Inventor: MORIMOTO, Shinji, Wakayama-shi Wakayama 641-0003 (JP); NAKAMURA, Toshinori, Wakayama-shi Wakayama 641-0003 (JP)
(74) Representative: Wagner, Karl H.
(86) International application number: PCT/JP2008/064054
(87) International publication number: WO 2009/028311

(56) References cited:
- JP-A- 2000 331 050
- JP-A- 2002 117 414
- JP-A- 2004 070 519
- RUDOMIN I ET AL: 'Multilayer garments using isosurfaces and physics' JOURNAL OF VISUALIZATION AND COMPUTER ANIMATION WILEY UK vol. 12, no. 4, September 2001, pages 215 - 226, XP002662165 ISSN: 1049-8907

## Description

The present invention relates to simulation of layering.

Patent Document 1 (Japanese Patent Application Publication No. 2002-117414) describes simulation of layering. In this simulation, an order of garments to be worn is specified to simulate a wearing state, starting from the inner garment. Here, the calculation of interference between the inner garment and the outer garment is simplified in consideration of the fact that the inner garment is not affected by the outer garment but the outer garment is affected by the inner garment. Patent Document 1 also discloses a method of determining a collision between polygons configuring each garment in order to evaluate the presence/absence of interference between the garments.

Although the order of garments to be worn in the layering has a degree of freedom, Patent Document 1 does not take this point into consideration. For example, there is a choice between wearing a shirt or a sweater on a skirt or pants and wearing a skirt or pants on a shirt or a sweater. There is also freedom in wearing a skirt or a pair of jeans under a shirt. In Patent Document 1, when the order of wearing the garments is changed, the simulation is started from the beginning and most of the data for the previous simulation can no longer be used.

JOURNAL OF VISUALIZATION AND COMPUTER ANIMATION; J. Visual. Comput. Animat. 2001; 12; 215 to 226 DOI: 10.1002/ vis.261); "Multilayer garments using isosurfaces and physics"; by Isaac Rudomín et al describes simulating multilayer garments using isosurfaces.

An object of the present invention is to perform, in a short time, simulation such as changing an order of the layering and changing a combination of garments. This and other objects are solved by a layering simulation apparatus having the features as set forth in claim 1. Preferred embodiments of the layering simulation apparatus are stated in the dependent claims 2 and 3.

In a layering simulation apparatus for simulating a wearing state of a plurality of garments put on a human body model, having input means for inputting a layering order of an inner garment and an outer garment to be layered, detection means for detecting a section in an image of the outer garment and an image of the inner garment inconsistent with the layering order, and moving means for moving the outer garment to the outside of the inner garment in the section in the images, the present invention is provided with:
storage means for storing the image of the outer garment and the image of the inner garment, worn by the human body model, resultant by the simulation without the other garment to be layered, wherein the detection means detects a section inconsistent with the layering order in a superposed image of the image of outer garment and the image of the inner garment stored in the storage means;
smoothing means for smoothing the image of the outer garment moved by the moving means; and
simulation means for simulating the wearing state of the plurality of garments from the superposed image, wherein the image of the outer garment is smoothened by the smoothing means in the superposed image.
The objects of the invention are also solved by a layering simulation method as defined in claim 4.

In a layering simulation method for simulating a wearing state of a plurality of garment put on a human body model, inputting from input means a layering order of an inner garment and an outer garment to be layered; detecting by detection means, in an image of the outer garment and an image of the inner garment, a section inconsistent with the layering order; and moving, by moving means, the outer garment to the outside of an image of the inner garment in the section in the images, the present invention is also characterized by:
storing, by storage means, the image of the outer garment and the image of the inner garment worn by the human body model, resultantly the simulation without the other garment to be layered, wherein the detection means detects the section inconsistent with the layering order, in a superposed image of outer garment and the image of the inner garment stored in the storage means;
smoothing, by smoothing means, the image of the outer garment moved by the moving means; and
simulating, by simulation means, the wearing state of the plurality of garments from the superposed image, after the image of the outer garment is smoothened by the smoothing means in the superposed image.
Furthermore, the stated and further objects are also solved by a layering simulation program as stated in claim 5.

In a layering simulation program for simulating a wearing state of a plurality of garments put on a human body model, causing a digital information processing device to execute an input step of receiving an input of a layering order of an inner garment and an outer garment to be layered, a detection step of detecting a section in an image of the outer garment and an image of the inner garment inconsistent with the layering order, and a moving step of moving the outer garment to the outside of the inner garment, in the section in the images,
the present invention is also characterized in further causing the digital information device to execute:
a storage step of storing the image of the outer garment and the image of the inner garment worn by the human body model resultant by the simulation without the other garment to be layered, with the detection of the section inconsistent with the input layering order in a superposed image of the outer garment and the inner garment;
a smoothing step for smoothing the image of the outer garment moved in the moving step; and
a simulation step for simulating the wearing state of the plurality of garments from the superposed image, wherein the outer garment is smoothened in the superposed image in the smoothing step.

It is preferred that the simulation of the wearing state of the layering be performed such that the inner garment is deformed by the interference of the outer garment.

It is also preferred that the image of the outer garment obtained after the movement be smoothed prior to the simulation of the wearing state of the layering.

It is preferred that the image of each garment be configured by a plurality of polygons, that,
when detecting the section in which the superposed images are inconsistent with the order of the inner and outer garments, scanning be performed in a predetermined order to check whether the polygons of the image of the garment that should be the outer garment are located outside the image of the garment that should be the inner garment, that the scanning result be stored, and that the scanning result thus obtained regarding adjacent polygons be used for subsequent scanning.

In this specification, the description of the simulation apparatus applies directly to the simulation method and the simulation program, and the descriptions of the simulation method and the simulation program apply to the simulation apparatus.

In the present invention, when, for example, simulating the layering of two garments:
a: The wearing state of the two garments is simulated independently;
b: The order of the layering is input;
c: The images of the two garments are superposed, and thus obtained simulation image is moved so that the garment that should be the outer garment is located outside; and
d: The wearing state of the layering is simulated.

In this case, even when the order of the layering is changed, the process of a is not wasted, and the processes of c and d may be re-executed.

Compared to the case where the wearing state of one garment is simulated and then the wearing state of the second image from the top of this image is simulated, the first simulation is performed at lower speed. However, when the simulation is performed again with a changed layering order, it can be performed at high speed because the process of the a above does not have to be repeated. Moreover, when changing the combination of the garments to be layered, i.e., when changing a shirt to be combined with a skirt, the process of the a above can be partially omitted, allowing the process to be efficient.

In addition, when the simulation is performed such that the inner garment is deformed by the interference of the outer garment, the simulation can be more realistic than when fixing the inner garment and simulating only the outer garment.

When the image of the outer garment obtained after the movement is smoothed prior to the simulation of the wearing state of the layering, speeding up of the simulation can be realized by the initial state obtained in the simulation of the wearing state of the layering to a final state.

Preferably, the following process is performed in order to detect the section in which the superposed images are inconsistent with the order of the inner and outer garments. Scanning is performed in a predetermined order to check whether the polygons of the image of the garment that should be the outer garment are located outside the image of the garment that should be the inner garment, and thus obtained scanning result is stored. Furthermore, the scanning result obtained from the adjacent polygon is used for subsequent scanning. Once finding out, in one section of the layering, which polygon of one of the garments is brought close to any of the polygons of the other garment, it becomes possible to estimate which one of the polygons is brought close to the other polygon in other section as well. In this manner, the section in which the superposed images are inconsistent with the order of the inner and outer garments can be detected at high speed.

Fig. 1 is a block diagram of a layering simulation apparatus according to an embodiment;
Fig. 2 is a diagram showing simulation of layering according to the embodiment;
Fig. 3 is a block diagram of inner/outer determination unit according to the embodiment;
Fig. 4 is a diagram showing how scanning is performed in inner/outer determination;
Fig. 5 is a diagram showing a modification of a scanning direction in the inner/outer determination;
Fig. 6 is a diagram schematically showing the inner/outer determination in units of polygons;
Fig. 7 is a diagram schematically showing an inner/outer determination table according to the embodiment;
Fig. 8 is a diagram schematically showing force that is generated between polygons by moving a garment to the outside;
Fig. 9 is a block diagram of a smoothing unit according to the embodiment;
Fig. 10 is a diagram schematically showing force acting between the polygons;
Fig. 11 is a diagram schematically showing the time required in the layering simulation, wherein 1) shows the embodiment, 2) a conventional example in which an inner garment is viewed as a rigid body same as a human body model, and 3) a conventional example in which fiction between inner and outer garments is taken into consideration; and
Fig. 12 is a block diagram of a layering simulation program according to the embodiment.

- 2: Layering simulation apparatus
- 4: Manual input
- 6: Image input/output
- 8: Color monitor
- 10: Color printer
- 12: Individual simulation unit
- 14: Inner/outer determination unit
- 16: Smoothing unit
- 18: Friction processing unit
- 20: Rendering unit
- 22: Memory
- 32: Scanning management unit
- 34: Friction detection unit
- 36: Inner/outer determination table
- 38: Moving unit
- 40, 50: Outer garment
- 42, 52: Inner garment
- 44, 54: Outer garment after movement
- 46, 56: Axis
- 90: Stress calculation unit
- 92: Movement processing unit
- 94: Collision determination unit
- 100 to 104: Polygon
- 105 to 107: Polygon after movement
- 121: Individual simulation instruction
- 122: Inner/outer determination instruction
- 123: Smoothing instruction
- 124: Layering simulation instruction
- P1 to P3: Polygon
- a, b, c: Apex vector
- n: Normal vector
- p: Apex vector

Best mode for carrying out the present invention is described hereinafter.

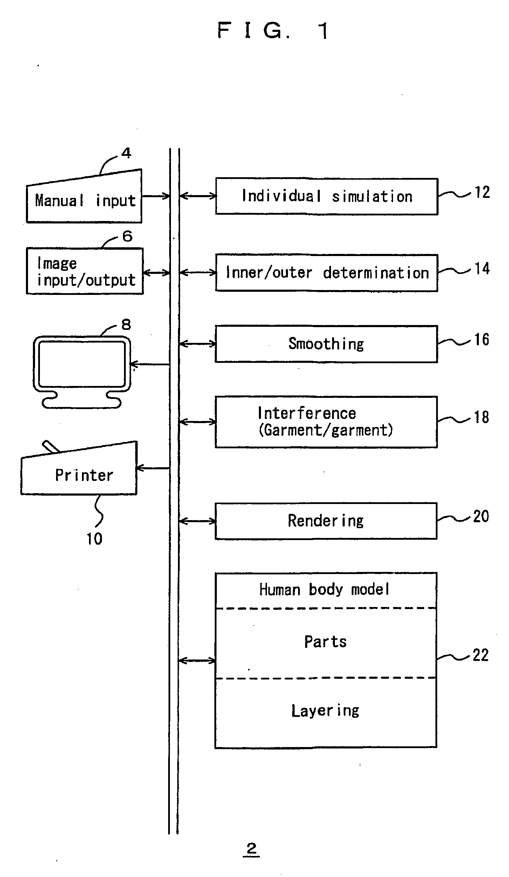

Figs. 1 to 12 show layering simulation according to an embodiment. In these figures, reference numeral 2 represents a layering simulation apparatus, and reference numeral 4 a manual input, such as a keyboard, mouse, stylus and trackball. Reference numeral 6 represents an image input/output, such as a disk drive and a network interface, reference numeral 8 a color monitor, and reference numeral 10 a color printer. Reference numeral 12 represents an individual simulation unit for simulating the wearing states of individual garments to be layered on a human body model. Reference numeral 14 represents an inner/outer determination unit for determining the states of inner and outer garments between the layered garments, detecting a section in which the garment that should be the outer garment is located internally, and moving such garment to the outside. Reference numeral 16 represents a smoothing unit for smoothing images of the garments moved to the outside by the inner/outer determination unit 14. Note that, in this specification, a garment used as a physical model or an image of the garment is often referred to simply as a garment. The image of a garment is a 3D image composed of, for example, a model of a plurality of polygons or loops. Data of a physical garment are configured by data such as the coordinate, elastic modulus, friction coefficient, and mass of the center of each polygon or loop.

An interference processing unit 18 performs simulation on garments that are layered according to an order of inner and outer garments by means of inner/outer determination and smoothing processes in consideration of interference between the garments, thereby simulating the wearing state of the layering. Note that, in this specification, only the garments are deformed by the interference between the human body model and the garments, and both the inner garment and the outer garment are deformed by the interference between the garments, but only the outer garment may be deformed. The simulation of the wearing state of the layering is carried out in consideration of gravitational force acting on the inner and outer garments, frictional force or repulsion force generated by bringing the garments into contact with each other, frictional force or repulsion force acting from a human body onto the garments, and stress generated by deforming the garments. The interference processing unit 18 defines the three-dimensional shape of the layered garments.

A rendering unit 20 performs rendering on this three-dimensional image and further performs, for example, mapping and shading on the texture of the garments. The image of the inner garment and the image of the outer garment are synthesized in a section where the outer garment is semi-transparent. Additionally, the rendering unit 20 carries out other processes, such as reduction/enlargement of the images, as well as conversion of the viewpoint. A memory 22 stores the simulation data, especially the 3D data of the human body model, a 3D image obtained before putting the individual garments (parts) to be layered onto the human body model, and a simulation image used when putting the parts independently onto the human body model. The memory 22 also stores a simulation image obtained after layering the parts, as well as each data obtained in the course of simulation. In the embodiment, the human body model is provided with five axes for the torso, both hands and both legs, and the side away from these axes is considered the "outside", and the side near these axes is considered the "inside." The layering simulation apparatus according to this embodiment can be realized by a specialized computer, a person computer, or the like.

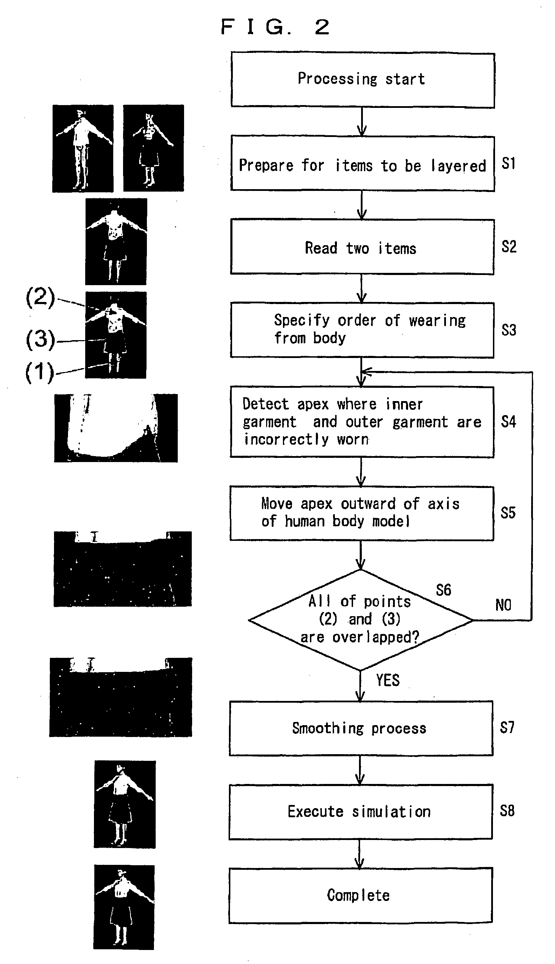

Fig. 2 shows a layering simulation algorithm. In step 1, the wearing states of the items (individual parts) to be layered are simulated, and thus obtained simulation result is stored. Two images in which the wearing states are simulated (the images of a skirt and shirt) are read, synthesized and displayed in step 2. Next, a user uses a manual input to specify an order of putting the items onto the human body model (step 3). Then, step 4 checks the order of the two inner and outer garments and detects a polygon of the outer garment that is located inside a polygon of the inner garment. The detected polygon is moved away from the axes of the human body model (step 5), and confirmation is made whether the apex of the polygon of the outer garment is in contact with the polygon of the inner garment, or whether the sides of the polygon of the outer garment are in contact with the polygon of the inner garment (step 6). In this manner, the inner and outer garments are put in correct order, but the garment that is moved to the outside is not smooth. Thus, the outer garment is smoothed in step 7. In the next step 8, the state of the layering of the inner garment and the outer garment is simulated. In so doing, the simulation is performed such that the both inner and outer garments are deformed by the interference between the inner and outer garments. Subsequently, rendering is performed thereon to obtain a simulation image (step 8).

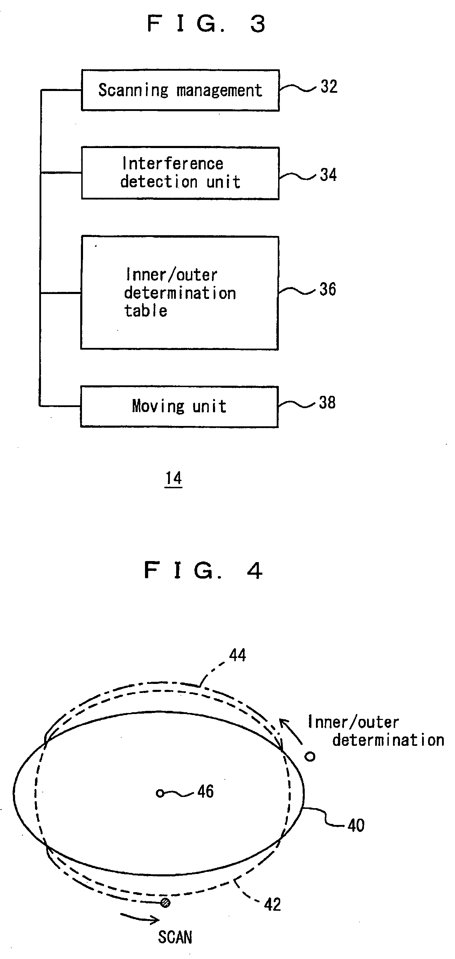

Fig. 3 shows the configuration of an inner/outer determination unit 14. Inner/outer determination is carried out by scanning all of the polygons of, for example, the outer garment in a predetermined order. A scanning management unit 32 manages the scanning, and an interference detection unit 34 detects a section in which the garment that should be the outer garment is in contact with the garment that should be the inner garment, or a section in which the garment that should be the outer garment is located inside the garment that should be the inner garment. Such detection is performed, in units of polygons, on each apex or side of each polygon of the garment that should be the outer garment. An inner/outer determination table 36 stores not only the determination result about whether the order of the inner and outer garments that is detected by the interference detection unit 34 is correct or not, but also the ID of a polygon that is likely to be interfered by each polygon of the outer garment, as well as the degree of the interference (reverse distance). Each time the scanning is performed, the detection result for each polygon of the outer garment is written to the inner/outer determination table 36, and, for the next scanning, the inner/outer determination table 36 is used for narrowing down the candidates for the polygon of the inner garment that is likely to be interfered. A moving unit 38 moves the outer garment to the outside of the axes of the human body model at a section where the order of the inner and outer garments is reversed.

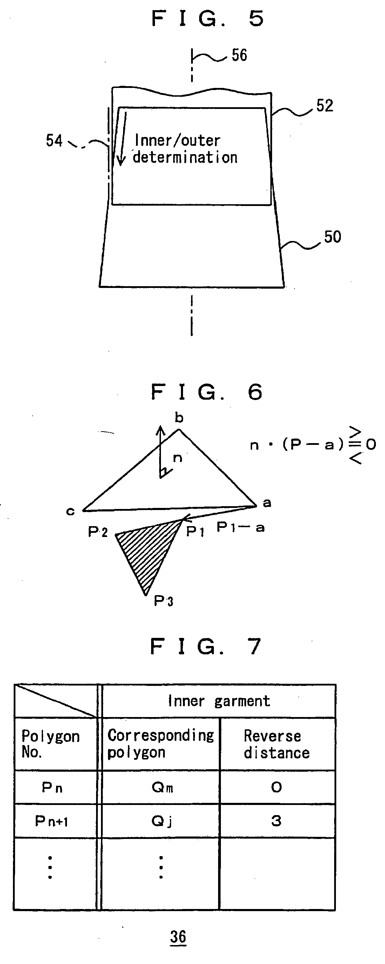

Figs. 4 and 5 show examples of the scanning. In Fig. 4, reference numeral 40 represents the outer garment, reference numeral 42 the inner garment, and reference numeral 44 the outer garment obtained after the movement. When the scanning is started from the white circle point in the direction of the arrow as shown in the diagram, the polygon of the inner garment 42 that is likely to be interfered with each polygon of the outer garment 40 is discovered. The polygon that is likely to be interfered is limited to the one that is superposed in substantially the radial direction extending from an axis 46, and this action is called "corresponding to the polygon." The polygons are arranged in a regular manner in each of the garments 40, 42. Therefore, once the correspondence relationship between the polygons on the inner and outer garments 40, 42 is discovered in the previous scanning, the polygon of the inner garment 42 that corresponds to the polygon of the outer garment 40 can be obtained for the subsequent scanning. Inversion or interference between the inner and outer garments occurs between the corresponding polygons. Because a drape or the like is formed on each garment, sometimes a plurality of the inner garments 42 exist outside the outer garment 40. Because the garments 40, 42 involve the axis 46, the direction of moving the outer garment 40 represents a direction in which the outer garment 40 is moved away from the axis 46 on the outside of a line connecting the axis 46 with a relevant polygon. In Fig. 5, reference numeral 56 represents an axis, reference numeral 50 the outer garment, reference numeral 52 the inner garment, and reference numeral 54 the outer garment obtained after the movement. The outer garment 50 is used as a skirt. The scanning may be performed in the peripheral direction of the skirt 50 as shown in Fig. 4, or in the vertical direction as shown in Fig. 5.

Fig. 6 shows how the interference between polygons is determined. Suppose that the correspondence relationship between the polygons is discovered from the inner/outer determination table of Fig. 3 beforehand. The triangle ΔP1P2P3 shown in the diagram is a polygon of the outer garment, and the triangle Δabc is a polygon of the inner garment. A normal vector of the polygon Δabc of the inner garment is represented by an alphabet n. When the apex P1 is in contact with or located inside the polygon Δabc, the inner product of the vector from any point of the polygon Δabc to the apex P1 and the normal line n should be 0 or a negative number. Here, suppose that the result of the inner product n•(P-a) obtained for each apex of the polygon ΔP1P2P3 is a negative number or 0 and that the order of the inner and outer garments is reversed. Note that the normal line n is directed away from the axis. It should also be noted that any method can be used to perform the inner/outer determination.

Fig. 7 shows the inner/outer determination table 36. Each row of the table is provided for each polygon of the outer garment and has the description of the ID and reverse distance of a corresponding polygon of the inner garment. The corresponding polygon is a polygon that is likely to be superposed in the radial direction extending from an axis of the human body involved by the garments. The reverse distance is 0 when there is no possibility of contact or reverse between the inner and outer garments, and is 1 when contact is established, and the value of the reverse distance increases as the garment that should be the outer garment is reversed to the inside. The polygons of the outer garment are moved so that all of the reverse distances become 0.

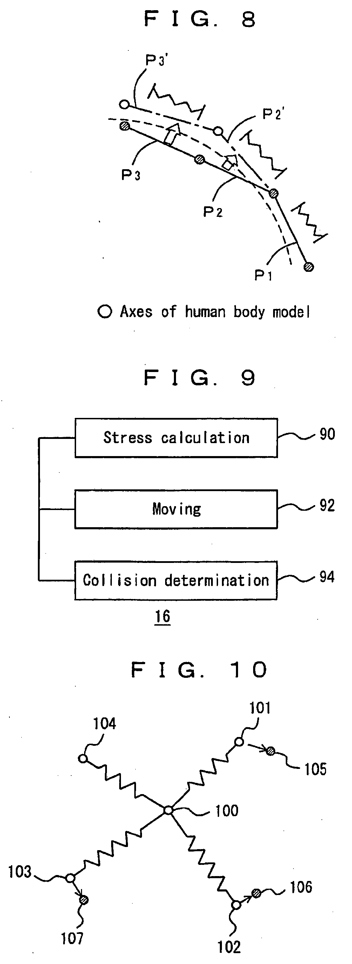

Fig. 8 schematically shows the movement of the outer garment. The dashed line shown in the diagram represents the garment that should be the inner garment, wherein polygons P2, P3 out of polygons P1, P2 and P3 of the outer garment need to be moved. When these polygons are moved to polygons P2', P3', the polygons are deformed, and as a result force is generated. In the present embodiment, the polygons are balanced before being moved, and force that draws or pushes away each polygon is generated by shrinkage of the polygons due to the movement. Note that the white circles shown in Fig. 8 represent the axes of the human body.

Fig. 9 shows the configuration of the smoothing unit 16, wherein reference numeral 90 represents a stress calculation unit for calculating stress that is generated between the polygons as a result of the shrinkage of the polygons after the movement. Reference numeral 92 represents a movement processing unit for moving the polygons of the outer garment to eliminate the stress, and a collision determination unit 94 detects a collision between a polygon and the human body model or the inner garment, and moves the collided polygon again to a position so that it does not come into contact with the human body model or the inner garment.

Fig. 10 shows a model of force acting between the polygons of each garment. This model is used for the smoothing or processing the interference. Reference numerals 100 to 104 represent the polygons, wherein the central coordinate of each polygon is shown. The adjacent polygons are connected with one the other by a spring or the like. When simulating the wearing state of the individual garments or simulating the layering in consideration of the interference between the garments, gravitational force acting on the polygons, repulsion force or frictional force generated by bringing the polygons into contact with the human body model, and repulsion force or frictional force generated by bringing the inner and outer garments into contact with each other are added as well. Each of the polygons is moved by the force acting between the polygons, and the moved polygons are represented by reference numerals 105 to 107. Then, the force acting on each of the moved polygons is obtained to move the polygons. The smoothing process or other simulation can be performed by repeating the cycle described above.

It is preferred that the size of the polygons used for the inner/outer determination or smoothing be different from the size of the polygons used for the simulation of the individual wearing states or the layering simulation. In other words, when the inner/outer determination or the smoothing is carried out, the polygons that are larger than those used in the other processes may be used to speed up the inner/outer determination. When the simulation of the individual wearing states or the layering simulation is performed, smaller polygon may be used so that minute simulation can be realized. Note that the smoothing process can be eliminated by carrying out the inner/outer determination with polygons that are of the same size as those used in the simulation of the individual wearing states or the layering simulation. Once the smoothing is completed, the simulation is performed on the inner garment and the outer garment based on the forces acting on the polygons, such as the stress and gravitational force between the polygons, the repulsion force or frictional force generated by the friction between the inner and outer garments, and the repulsion force or frictional force received from the human body model, to conduct the simulation of the wearing state of the layering.

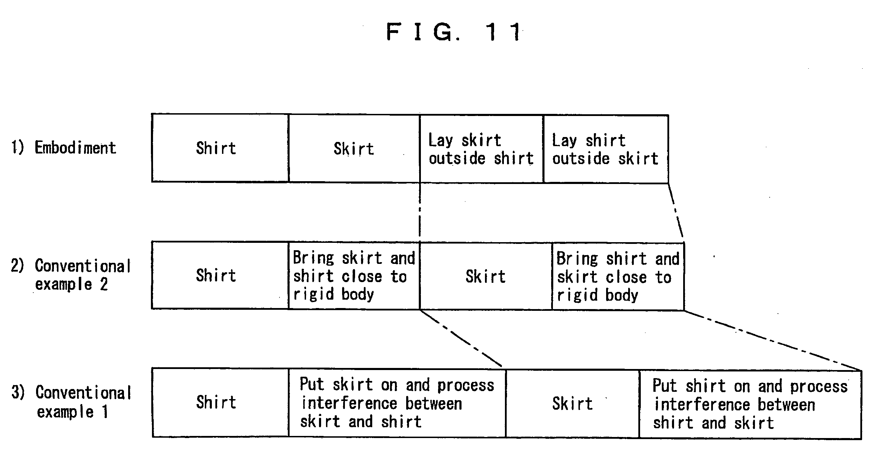

Fig. 11 shows the time required in the simulation. For example, a shirt and skirt are put on the human body model as shown in Fig. 2, then the wearing state of only the shirt and the wearing state of only the skirt are simulated individually, and thus obtained simulation data are stored. Next, the skirt is laid outside the shirt to perform the layering simulation in consideration of the interference between the skirt and the shirt. Subsequently, the wearing order is reversed, and the individual simulation results of the shirt and the skirt are referred to again. The shirt is laid outside the skirt to perform the layering simulation. In this manner, the two types of simulation can be executed by reversing the layering order.

On the other hand, simulation performed in a conventional example based on the interference between the inner garment and the outer garment is taken as a conventional example 1. In the conventional example 1, the shirt is put on the human body model first, and then the skirt is put to perform the layering simulation based on the interference between the shirt and the skirt. When the skirt is placed under the shirt, the processing time increases because the same processing is repeated from the beginning. When the interference between the inner and outer garment is not taken into consideration for the layering, that is, when the inner garment is brought close to the rigid body (conventional example 2), the simulation can be carried out using the same processing as the present embodiment, but a questionable simulation result is obtained in proportion to the disregard to the interference between the garments.

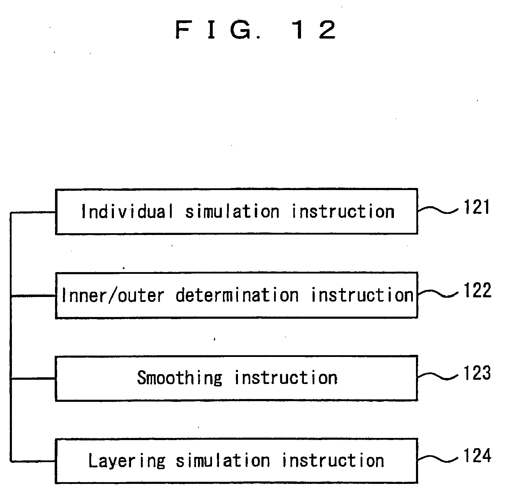

Fig. 12 shows a simulation program according to the embodiment. Reference numeral 121 represents an individual simulation instruction for simulating the wearing state of the individual garments to be layered. Reference numeral 122 represents an inner/outer determination instruction for detecting, based on the input of the order of the inner and outer garments, a section that is inconsistent with this order, and moves the garment that should be the outer garment, at this section. Reference numeral 123 represents a smoothing instruction for smoothing the outer garment after the movement, and this instruction can be omitted. Reference numeral 124 represents a layering simulation instruction for simulating the layering of the garments obtained after the smoothing, while taking the interference between the inner garment and outer garment into consideration.

The present embodiment has illustrated the simulation of a shirt and skirt. However, for example, the type of the shirt placed on the same skirt can be changed, or the skirt placed on the same shirt can be changed to a pair of pants.

Moreover, the layering simulation program can be executed by a personal computer or an appropriate specialized computer for designing.

The following effects can be accomplished by the present embodiment:
(1) When the layering order is reversed or the combination of garments to be layered is changed, the layering can be simulated in a short time.
(2) When the inner/outer determination is performed on the layered garments, the correspondence relationship between the polygons of the inner/outer garments can be used to reduce the number of polygons used for checking the relationship between the inner and outer garments.
(3) The time required for the inner/outer determination can be reduced by simplifying the inner/outer determination using larger polygons and then smoothing the garments.
(4) The layering can be simulated accurately by taking the interference between the inner and outer garments into consideration.

## Claims

1. A layering simulation apparatus (2) comprising simulation means (18) for simulating a wearing state of a plurality of garments put on a human body model, having input means (4) for inputting a layering order of an inner garment (42, 52) and an outer garment(40, 50) to be layered, detection means (34, 36) for detecting a section in an image of the outer garment (40, 50) and an image of the inner garment (42, 52) inconsistent with the layering order, the image being a 3D model of a garment comprising a plurality of polygons or loops and having elastic modulus and friction coefficient moving means (38) for moving the outer garment (40, 50) to the outside of the inner garment (42, 52) in the section in the images, and a rendering unit (20) performing rendering on the 3D image,
the layering simulation apparatus being **characterized by**:
storage means (22) for storing the image of the outer garment (40, 50) and the image of the inner garment (42, 52), worn by the human body model, resultant by the simulation without the other garment to be layered, wherein the detection means (34, 36) detects a section inconsistent with the layering order in a superposed image of the outer garment(40, 50) and the image of the inner garment (42, 52) stored in the storage means (22);
smoothing means (16) for smoothing the image of the outer garment(40, 50) moved by the moving means (38); and
the simulation means (18) simulating the wearing state of the plurality of garments from the superposed image, wherein the image of the outer garment (40, 50) is smoothened by the smoothing means (16) in the superposed image.

2. The layering simulation apparatus (2) according to claim 1, wherein the simulation means (18) simulates the wearing state of the layering such that the inner garment (42, 52) is deformed by interference of the outer garment (40, 50).

3. The layering simulation apparatus 2 according to claim 1, wherein the image of each of the garments is configured by a plurality of polygons 100 to 104, and the detection means (34, 36) performs scanning in a predetermined order to check whether the polygons 100 to 104 of the image of the outer garment(40, 50) are located outside the image of the inner garment (42, 52), stores an obtained scanning result, and uses the scanning result regarding adjacent polygons for subsequent scanning.

4. A layering simulation method for simulating a wearing state of a plurality of garment put on a human body model, inputting from input means (4) a layering order of an inner garment (42, 52) and an outer garment (40, 50) to be layered; detecting by detection means (34, 36) in an image of the outer garment (40, 50) and an image of the inner garment (42, 52), a section inconsistent with the layering order, the image being a 3D model of a garment comprising a plurality of polygons or loops and having elastic modulus and friction coefficient; moving, by moving means (38), the outer garment (40, 50) to the outside of the inner garment (42, 52) in the section in the images, and performing rendering on the 3D image by a rendering unit (20),
the layering simulation method being **characterized by**:
storing, by storage means (22), the image of the outer garment (40, 50) and the image of the inner garment (42, 52) worn by the human body model, resultantly the simulation without the other garment to be layered, wherein the detection means (34, 36) detects the section inconsistent with the layering order, in a superposed image of outer garment(40, 50) and the image of the inner garment (42, 52) stored in the storage means (22);
smoothing, by smoothing means (16), the image of the outer garment(40, 50) moved by the moving means; and
simulating, by simulation means (18), the wearing state of the plurality of garments from the superposed image, after the image of the outer garment (40, 50) is smoothened by the smoothing means (18) in the superposed image.

5. A layering simulation program comprising a simulation step for simulating a wearing state of a plurality of garments put on a human body model, causing a digital information processing device to execute an input step of receiving an input of a layering order of an inner garment (42, 52) and an outer garment (40, 50) to be layered, a detection step of detecting a section in an image of the outer garment (40, 50) and an image of the inner garment (42, 52) inconsistent with the layering order, the image being a 3D model of a garment comprising a plurality of polygons or loops and having elastic modulus and friction coefficient, a moving step of moving the outer garment to the outside of the inner garment (42, 52), in the section in the images, and a rendering step for performing rendering on the 3D image by a rendering unit (20),
the layering simulation program being **characterized in** further causing the digital information device to execute:
a storage step of storing the image of the outer garment (40, 50) and the image of the inner garment (42, 52) worn by the human body model resultant by the simulation without the other garment to be layered, with the detection of the section inconsistent with the input layering order in a superposed image of the outer garment (40, 50) and the inner garment (42, 52);
a smoothing step for smoothing the image of the outer garment(40, 50) moved in the moving step; and
the simulation step simulating the wearing state of the plurality of garments from the superposed image, wherein the outer garment (40, 50) is smoothened in the superposed image in the smoothing step.

## Patentansprüche

1. Schichtungs-Simulationsvorrichtung (2), die eine Simulationseinrichtung (18) zum Simulieren des Tragezustands einer Vielzahl von Kleidungsstücken, die an einem Modell eines menschlichen Körpers angelegt werden, aufweist, mit einer Eingabeeinrichtung (4) zum Eingeben einer Schichtungsreihenfolge eines inneren Kleidungsstücks (42, 52) und eines damit zu schichtenden äußeren Kleidungsstücks (40, 50), einer Erfassungseinrichtung (34, 36) zum Erfassen eines Abschnitts in einem Bild des äußeren Kleidungsstücks (40, 50) und eines Bildes des inneren Kleidungsstücks (42, 52), der nicht der Schichtungsreihenfolge entspricht, wobei das Bild ein 3D-Modell eines Kleidungsstücks ist, das aus einer Vielzahl von Polygonen oder Ringen besteht und ein Elastizitätsmodul und eine Reibungskoeffizienten aufweist, eine Bewegungseinrichtung (38) zum Bewegen des äußeren Kleidungsstücks (40, 50) zu der Außenseite des inneren Kleidungsstücks (42, 52) in dem Abschnitt in den Bildern, und eine Renderingeinheit (20) zum Durchführen eines Renderings auf dem 3D-Bild umfasst,
wobei die Schichtungssimulationsvorrichtung **gekennzeichnet ist durch**:
eine Speichereinrichtung (22) zum Speichern des Bilds des äußeren Kleidungsstücks (40, 50) und des Bilds des inneren Kleidungsstücks (42, 52), die **durch** das Modell des menschlichen Körpers getragen werden, wobei die Bilder aus der Simulation ohne das andere zu schichtende Kleidungsstück resultieren, wobei die Erfassungseinrichtung (34, 36) einen Abschnitt, der nicht der Schichtungsreihenfolge entspricht, in einem überlagerten Bild des äußeren Kleidungsstücks (40, 50) und dem Bild des inneren Kleidungsstücks (42, 52), die in der Speichereinrichtung (22) gespeichert sind, erfasst,
eine Glättungseinrichtung (16) zum Glätten des Bilds des äußeren Kleidungsstücks (40, 50), das **durch** die Bewegungseinrichtung (38) bewegt wird, und
die Simulationseinrichtung (18), die den Tragezustand der Vielzahl von Kleidungsstücken aus dem überlagerten Bild simuliert, wobei das Bild des äußeren Kleidungsstücks (40, 50) **durch** die Glättungseinrichtung (16) in dem überlagerten Bild geglättet wird.

2. Schichtungs-Simulationsvorrichtung (2) nach Anspruch 1, wobei die Simulationseinrichtung (18) den Tragezustand der Schichtung derart simuliert, dass das innere Kleidungsstück (42, 52) durch den Einfluss des äußeren Kleidungsstücks (40, 50) verformt wird.

3. Schichtungs-Simulationsvorrichtung (2) nach Anspruch 1, wobei das Bild jedes Kleidungsstücks durch eine Vielzahl von Polygonen 100 bis 104 konfiguriert wird, und wobei die Erfassungseinrichtung (34, 36) ein Abtasten in einer vorbestimmten Reihenfolge durchführt, um zu prüfen, ob die Polygone 100 bis 104 des Bilds des äußeren Kleidungsstücks (40, 50) außerhalb des Bilds des inneren Kleidungsstücks (42, 52) liegen, ein erhaltenes Abtastungsergebnis speichert und das Abtastungsergebnis in Bezug auf benachbarte Polygone für ein folgendes Abtasten verwendet.

4. Schichtungs-Simulationsverfahren zum Simulieren eines Tragezustands einer Vielzahl von Kleidungsstücken, die an einem Modell eines menschlichen Körpers angelegt werden, für das Eingeben, von einer Eingabeeinrichtung (4), einer Schichtungsreihenfolge eines inneren Kleidungsstücks (42, 52) und eines damit zu schichtenden äußeren Kleidungsstücks (40, 50), für das Erfassen, durch eine Erfassungseinrichtung (34, 36), in einem Bild des äußeren Kleidungsstücks (40, 50) und einem Bild des inneren Kleidungsstücks (42, 52) eines Abschnitts, der nicht der Schichtungsreihenfolge entspricht, wobei das Bild ein 3D-Modell eines Kleidungsstücks ist, das aus einer Vielzahl von Polygonen oder Ringen besteht und ein Elastizitätsmodul und einen Reibungskoeffizienten aufweist, für das Bewegen, durch eine Bewegungseinrichtung (38), des äußeren Kleidungsstücks (40, 50) zu der Außenseite des inneren Kleidungsstücks (42, 52) in dem Abschnitt in den Bildern, und zum Durchführen eines Renderings auf dem 3D-Bild durch eine Renderingeinheit (20),
wobei das Schichtungs-Simulationsverfahren **gekennzeichnet ist durch**:
Speichern, **durch** die Speichereinrichtung (22), des Bilds des äußeren Kleidungsstücks (40, 50) und des Bilds des inneren Kleidungsstücks (42, 52), die **durch** das Modell des menschlichen Körpers getragen werden, wobei die Bilder aus der Simulation ohne das andere zu schichtende Kleidungsstück resultieren, wobei die Erfassungseinrichtung (34, 36) den Abschnitt, der nicht der Schichtungsreihenfolge entspricht, in einem überlagerten Bild des äußeren Kleidungsstücks (40, 50) und dem Bild des inneren Kleidungsstücks (42, 52), die in der Speichereinrichtung (22) gespeichert sind, erfasst,
Glätten, **durch** die Glättungseinrichtung (16), des Bilds des äußeren Kleidungsstücks (40, 50), das **durch** die Bewegungseinrichtung bewegt wird, und
Simulieren, **durch** die Simulationseinrichtung (18), des Tragezustands der Vielzahl von Kleidungsstücken aus dem überlagerten Bild, nachdem das Bild des äußeren Kleidungsstücks (40, 50) **durch** die Glättungseinrichtung (18) in dem überlagerten Bild geglättet wurde.

5. Schichtungs-Simulationsprogramm, das einen Simulationsschritt zum Simulieren des Tragezustands einer Vielzahl von Kleidungsstücken, die an einem Modell eines menschlichen Körpers angelegt werden, umfasst, wobei eine Vorrichtung zum Verarbeiten von digitalen Informationen dazu veranlasst wird, einen Eingabeschritt zum Empfangen einer Eingabe einer Schichtungsreihenfolge eines inneren Kleidungsstücks (42, 52) und eines damit zu schichtenden äußeren Kleidungsstücks (40, 50), einen Erfassungsschritt zum Erfassen eines Abschnitts eines Bilds des äußeren Kleidungsstücks (40, 50) und eines Bilds des inneren Kleidungsstücks (42, 52), der nicht der Schichtungsreihenfolge entspricht, wobei das Bild ein 3D-Modell eines Kleidungsstücks ist, das aus einer Vielzahl von Polygonen oder Ringen besteht und ein Elastizitätsmodul und einen Reibungskoeffizienten aufweist, einen Bewegungsschritt zum Bewegen des äußeren Kleidungsstücks zu der Außenseite des inneren Kleidungsstücks (42, 52) in dem Abschnitt in den Bildern und einen Renderingschritt zum Durchführen eines Renderings auf dem 3D-Bild durch eine Renderingeinheit (20) ausführt,
wobei das Schichtungs-Simulationsprogramm **dadurch gekennzeichnet ist, dass** es die Vorrichtung zum Verarbeiten von digitalen Informationen weiterhin dazu veranlasst, durchzuführen:
einen Speicherschritt zum Speichern des Bilds des äußeren Kleidungsstücks (40, 50) und des Bilds des inneren Kleidungsstücks (42, 52), die durch das Modell des menschlichen Körpers getragen werden, wobei die Bilder aus der Simulation ohne das andere zu schichtende Kleidungsstück resultieren, zusammen mit dem Erfassen des Abschnitts, der nicht der Schichtungsreihenfolge entspricht, in einem überlagerten Bild des äußeren Kleidungsstücks (40, 50) und des inneren Kleidungsstücks (42, 52),
einen Glättungsschritt zum Glätten des Bilds des äußeren Kleidungsstücks (40, 50), das in dem Bewegungsschritt bewegt wird, und
den Simulationsschritt zum Simulieren des Tragezustands der Vielzahl von Kleidungsstücken aus dem überlagerten Bild, wobei das äußere Kleidungsstück (40, 50) in dem überlagerten Bild in dem Glättungsschritt geglättet wird.

## Revendications

1. Dispositif de simulation de superposition de couches (2) comprenant des moyens de simulation (18) pour simuler un état porté d'une pluralité de vêtements mis sur un modèle de corps humain, comportant des moyens d'entrée (4) pour introduire un ordre de superposition en couches d'un vêtement intérieur (42, 52) et d'un vêtement extérieur (40, 50) à superposer en couches, des moyens de détection (34, 36) pour détecter une section dans une image du vêtement extérieur (40, 50) et une image du vêtement intérieur (42, 52) incompatible avec l'ordre de superposition en couches, l'image étant un modèle 3D d'un vêtement comprenant une pluralité de polygones ou de boucles et comportant des moyens de déplacement avec module élastique et coefficient de friction (38) pour déplacer le vêtement extérieur (40, 50) vers l'extérieur du vêtement intérieur (42, 52) dans la section dans les images, et un module de rendu (20) réalisant le rendu sur l'image 3D,
le dispositif de simulation de superposition en couches étant **caractérisé par** :
des moyens de stockage (22) pour mémoriser l'image du vêtement extérieur (40, 50) et l'image du vêtement intérieur (42, 52), portés par le modèle de corps humain, résultant de la simulation sans l'autre vêtement à superposer en couches, les moyens de détection (34, 36) détectant une section incompatible avec l'ordre de superposition en couches dans une image superposée du vêtement extérieur (40, 50) et l'image du vêtement intérieur (42, 52) mémorisées dans les moyens de stockage (22) ;
des moyens de lissage (16) pour lisser l'image du vêtement extérieur (40, 50) déplacé par les moyens de déplacement (38) ; et
les moyens de simulation (18) simulant l'état porté de la pluralité de vêtements à partir de l'image superposée, l'image du vêtement extérieur (40, 50) étant lissée par les moyens de lissage (16) dans l'image superposée.

2. Dispositif de simulation de superposition en couches (2) selon la revendication 1, dans lequel les moyens de simulation (18) simulent l'état porté de la superposition en couches de telle sorte que le vêtement intérieur (42, 52) soit déformé par l'interférence du vêtement extérieur (40, 50).

3. Dispositif de simulation de superposition en couches 2 selon la revendication 1, dans lequel l'image de chacun des vêtements est configurée par une pluralité de polygones 100 à 104, et les moyens de détection (34, 36) réalisent une analyse dans un ordre prédéterminé pour vérifier si les polygones 100 à 104 de l'image du vêtement extérieur (40, 50) sont situés à l'extérieur de l'image du vêtement intérieur (42, 52), mémorisent un résultat d'analyse obtenu, et utilisent le résultat d'analyse concernant des polygones adjacents pour une analyse ultérieure.

4. Procédé de simulation de superposition en couches pour simuler un état porté d'une pluralité de vêtements mis sur un modèle de corps humain, introduire à partir de moyens d'entrée (4) un ordre de superposition en couches d'un vêtement intérieur (42, 52) et d'un vêtement extérieur (40, 50) à superposer en couches ; détecter par des moyens de détection (34, 36) dans une image du vêtement extérieur (40, 50) et une image du vêtement intérieur (42, 52), une section incompatible avec l'ordre de superposition en couches, l'image étant un modèle 3D d'un vêtement comprenant une pluralité de polygones ou de boucles et ayant un module d'élasticité et un coefficient de friction ; déplacer, par des moyens de déplacement (38), le vêtement extérieur (40, 50) vers l'extérieur du vêtement intérieur (42, 52) dans la section dans les images, et réaliser un rendu sur l'image 3D par un module de rendu (20),
le procédé de simulation de superposition en couches étant **caractérisé par** les étapes :
mémoriser, par des moyens de stockage (22), l'image du vêtement extérieur (40, 50) et l'image du vêtement intérieur (42, 52) portés par le modèle de corps humain, résultant de la simulation sans que l'autre vêtement soit superposé en couches, les moyens de détection (34, 36) détectant la section incompatible avec l'ordre de superposition en couches, dans une image superposée du vêtement extérieur (40, 50) et l'image du vêtement intérieur (42, 52) mémorisées dans les moyens de stockage (22) ;
lisser, par des moyens de lissage (16), l'image du vêtement extérieur (40, 50) déplacée par les moyens de déplacement ; et
simuler, par des moyens de simulation (18), l'état porté de la pluralité de vêtements à partir de l'image superposée, après que l'image du vêtement extérieur (40, 50) a été lissée par les moyens de lissage (18) dans l'image superposée.

5. Programme de simulation de superposition en couches comprenant une étape de simulation pour simuler un état porté d'une pluralité de vêtements mis sur un modèle de corps humain, amener un dispositif de traitement d'informations à exécuter une étape d'introduction consistant à recevoir une information d'entrée d'un ordre de superposition en couches d'un vêtement intérieur (42, 52) et d'un vêtement extérieur (40, 50) à superposer en couches, une étape de détection consistant à détecter une section dans une image du vêtement extérieur (40, 50) et une image du vêtement intérieur (42, 52) incompatible avec l'ordre desuperposition en couches, l'image étant un modèle 3D d'un vêtement comprenant une pluralité de polygones ou de boucles et comportant un module élastique et un coefficient de friction, une étape de déplacement consistant à déplacer le vêtement extérieur vers l'extérieur du vêtement intérieur (42, 52), dans la section dans les images, et une étape de rendu pour réaliser par un module de rendu (20)un rendu sur l'image 3D,
le programmede simulationde superposition en couches étant **caractérisé en outre en ce qu'**il amène le dispositif d'information numérique à exécuter :
une étape de stockage consistant à mémoriser l'image du vêtement extérieur (40, 50) et l'image du vêtement intérieur (42, 52), portés par le modèle de corps humain, résultant de la simulation sans l'autre vêtement à superposer en couches, avec la détection de la section incompatible avec l'ordre de superposition en couches dans une image superposée du vêtement extérieur (40, 50) et du vêtement intérieur (42, 52) ;
une étape de lissage consistant à lisser l'image du vêtement extérieur (40, 50) déplacé dans l'étape de déplacement; et
l'étape de simulation simulant l'état porté de la pluralité de vêtements à partir de l'image superposée, le vêtement extérieur (40, 50) étant lissédans l'image superposée dans l'étape de lissage.
